# EUROPEAN PATENT APPLICATION

(11) **EP 2 282 580 A1**
(43) Date of publication of application: **09.02.2011**
(21) Application number: 10170870.9
(22) Date of filing: 27.07.2010
(51) Int. Cl.: H04W 36/20, H04W 36/32, H04W 36/14, H04W 36/38

(54) **Redirecting calls between radio access technologies**

(30) Priority: 27.07.2009 ES 200930511
(71) Applicant: Vodafone Group PLC, Newbury Berkshire RG14 2FN (GB); Vodafone España, S.A.U., 28108 Alcobendas (ES)
(72) Inventor: García Cabezas, Jose Javier, E-28050, Madrid (ES); Dominguez Romero, Francisco, E-28050, Madrid (ES); Orobitg Morin, Carlos, E-28050, Madrid (ES)
(74) Representative: Keston, David Arthur

(57) **Abstract**

A method of redirecting a call of a mobile telecommunications device (10) from a first bearer radio access technology, RAT, to a second bearer radio access technology, comprising:
- obtaining information related to a distance from said device to the serving base station (20); and if said distance is above a specific predefined threshold distance,
- triggering a redirection of said call from the first bearer to the second bearer.

A network component of a mobile telecommunications network, the network comprising at least a first bearer RAT and a second bearer RAT, the component comprising:
distance measuring means for ascertaining the distance between any given mobile telecommunications device and a base station serving said device; and redirection means for redirecting calls made by mobile telecommunications devices from the first bearer RAT to the second bearer RAT;
wherein the redirection means is operable to redirect calls of the mobile telecommunications device when the measured distance between the mobile device and a base station (20) exceeds a specific predefined threshold distance.

## Description

### Field of the invention

The present invention relates to the field of mobile communications, and more specifically to arrangements related to handover and/or cell reselection between radio access technologies (RATs).

### Background of the invention

In current 3G radio access networks, some calls are dropped in cases where a Node B is providing coverage to a User Equipment (UE) that is located very far away from the Node B site.

Due to propagation of the radio signal, there are some cases in which a specific Node B is providing coverage at areas several kilometres away from the Node B site. But it was not foreseen that such Node B would give coverage in those areas, so there are no neighbouring cells defined in the environment; so when a user equipment served by said Node B moves to another cell, interference increases and as a consequence, many calls are dropped. This is different to the GSM network. In UMTS the UE must be in the strongest cell because all the cells are transmitting in the same frequency at the same time (only with Code Division), therefore it is essential to be located in the best cell. On the other hand, GSM network is frequency division, and then it is possible to be connected to a cell which is not the strongest one.

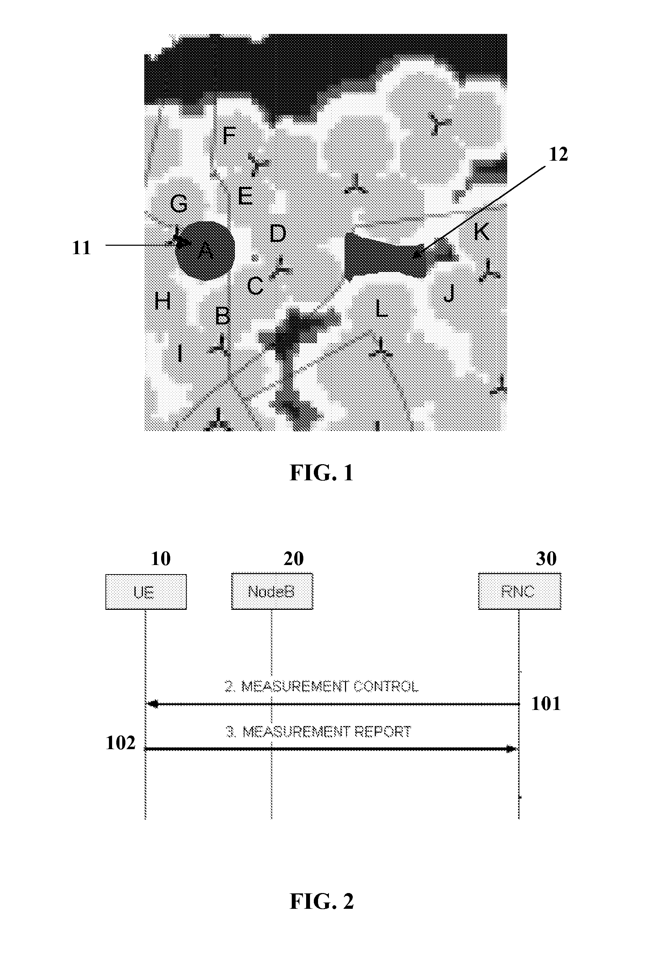

For example, as shown in Figure 1, a Node B (cell A) provides coverage in a first area 11 which surrounds it. But said same Node B is also covering a second area 12 which is located quite far away, farther than other Node B's/Base Stations. This situation can take place when the environment is favourable; for example, in the case of a Node B or base station located in the top of a hill with unimpeded line of sight to a large surrounding geographic area.

In the case shown in Figure 1, the neighbour cells of cell A are cells B, C, D, E, F, G H, I; cells K, J, L will not be defined as neighbours. So when a user equipment is under the coverage of cell A but near cell L (in the second area 12), the call will probably be dropped.

Unfortunately, there is no way in the current state of the art to mitigate this problem of dropped calls.

In current vendor implementation of the 3G system, there are some triggers for redirection related to the radio signal, such as Ec/No, RSCP (Received Signal Code Power), uplink transmission power, uplink interference or congestion problems.

US 2004/267928-A1 provides a method and an apparatus for facilitating base station selection/handover by a user terminal in a distributed (e.g., cellular-type) wireless communication system. The base station is selected on a distance-based criterion, but a handover process is not triggered because of the distance.

### Summary of the invention

The invention refers to a method of redirecting calls from a first bearer radio access technology to a second bearer radio access technology according to claim 1, and a network component according to claim 8. Typically the first bearer radio access technology is 3G while the second bearer radio access technology is 2G. Preferred embodiments of the method are defined in the dependent claims.

In order to overcome the problem of dropped calls, the present invention triggers a redirection from first bearer to second bearer whenever the distance from the base station to the user is above a pre-established threshold; this way, it is ensured that calls are not setup very far away from the base station.

The term 'call' refers to any attempt to establish a connection with the mobile network. It can be a speech call, a video-call or a packet switched call.

A first aspect of the invention relates to a method of redirecting a call of a mobile telecommunications device from first bearer to second bearer, comprising:
- obtaining information related to or measuring a distance from said device to the serving base station; and if said distance is above a specific predefined threshold distance,
- triggering a redirection of said call from first bearer to second bearer.

Preferably, said redirection from first bearer to second bearer is done by means of an RRC connection request message with an RRC Connection Reject including information to redirect the call towards the second bearer.

Another possibility is that said redirection is done during an end-to-end or ongoing call, by means of a standard handover procedure. In this case the ongoing call was setup when distance was under the threshold, but due to the mobility, the UE exceeds the distance threshold, then a standard handover is triggered from first bearer to second bearer.

According to a preferred embodiment, said distance is calculated with the standard propagation delay method, and it is calculated by the UTRAN.

Said redirection can be activated or not depending on the type of call: conversational, streaming, interactive and/or background.

A second aspect of the invention relates to a network component of a mobile telecommunications network, the network comprising at least a first bearer radio access technology and a second bearer radio access technology, the component comprising: distance measuring means for ascertaining the distance between any given mobile telecommunications device and a base station serving said device; and redirection means for redirecting calls made by mobile telecommunications devices from the first bearer radio access technology to the second bearer radio access technology;
wherein the redirection means is operable to redirect calls of the given mobile telecommunications device when the measured distance between the mobile telecommunications device and a base station (20) exceeds a specific predefined threshold distance.

The second aspect of the present invention thus refers to a network component of a mobile communications network suitable for carrying out the method defined above.

In the context of the present invention, the term "network component" is intended to mean a network entity such as a base station, a Node B or eNode B, or an RNC of a mobile communications network.

The advantages of the proposed invention will become apparent in the description that follows.

### Brief description of the drawings

Figure 1 shows the actual situation of a Node B unexpectedly providing coverage at areas located far away from it.
Figure 2 shows an example of the messages exchanged when the distance from the Node B to the User Equipment is measured using GPS devices.
Figure 3 shows an example of the messages exchanged when the distance from the Node B to the User Equipment is measured using a TDOA method.

### Detailed description of the preferred embodiments

Reference will now be made in detail to a preferred embodiment of the method of the present invention, which triggers a redirection from 3G bearer to 2G bearer based on the distance.

A handover to GSM is carried out when it is detected that a User Equipment exceeds a distance to the Node B.

According to the invention, the distance between the User Equipment UE and the serving Node B is measured; and if said measured distance exceeds a predefined threshold, then the call is redirected from 3G to 2G, so as to avoid that the call is dropped.

There are different ways to obtain or get information about the distance from the UE to the Node B. In any case, the distance accuracy should be enough to take the decision properly. Some possible ways of getting this information about distance, which provide enough accuracy, are:
- Propagation delay calculation
- GPS based UE measurements
- TDOA (Time difference of arrival)
- Other positioning systems

### Propagation delay:

It is the preferred way of getting information about the distance between the Node B and the UE, since it can be implemented easily without mobile special support and it is a measurement already done by the system to synchronise the transmission and reception.

The Propagation Delay Information Element is included in the radio link setup request. The Radio link setup request being the message sent from the RNC to the Node B to setup a call.

As indicated in the Technical Specification 25.433 of the 3GPP standard:
- Propagation Delay: the Propagation delay is the one-way propagation delay of the radio signal from the User Equipment to the Node B. If the range of the Propagation Delay Information Element (IE) is insufficient to represent the measured value, the Propagation Delay IE shall be set to its maximum value, and the Extended Propagation Delay IE shall be used to represent the propagation delay value.
- Extended Propagation Delay: the Extended Propagation delay is the one-way propagation delay of the radio signal from the User Equipment to the Node B. It shall be used if the Propagation Delay IE cannot represent the measured value, due to range.

This (extended) Propagation Delay IE reports the one-way propagation delay with steps of 3 chips. The UMTS system has a constant chip rate 3.84 Mcps, so the timing of every chip is 1/3.84 M which is 0.26 µs. With steps of 3 chips, the timing granularity of the propagation delay is 0.78 µs.

Taking into account that the speed of light is 300.000 Km/s, the propagation delay can provide a granularity distance of 234 m.

So at every call setup and during the call, the system has the information of the distance between the Node B and the UE with steps of 234 m.

### GPS based UE measurements

It is also possible to obtain information about the distance if the user equipment UE is provided with GPS functionalities.

The UE can calculate its positioning with an internal GPS, assisted or not by the network.

In this case the User Equipment is involved, and a set of messages is exchanged between the UE 10 and the RNC 30 connected to the serving Node B 20. These messages are standard and shown in Figure 2: the RNC 30 sends a message to the user equipment UE 10 requesting a measurement control (101), and the user equipment send a message to the RNC with a measurement report (102), including information on where such UE exactly is, according to his GPS coordinates.

### OTDOA Observed Time Difference of Arrival

This possible implementation is based on multilateration (also known as hyperbolic positioning), which is the process of locating an object (for instance, an emitter) by accurately computing the time difference of arrival (TDOA) of a signal emitted from the object to three or more receivers.

In this case, some LMU nodes (Location Measurements Units) are needed to receive a signal emitted from the Node B.

There are two possible modes (both standardised in 3GPP): UE assisted mode and UE based mode.

In the UE based mode, the user equipment UE directly carries out the calculation. This means that the UE calculates the geographical coordinates. For this, the UE needs to know the measurements with the Nodes B and the position of every Node B involved.

On RNC requests, the LMU needs to perform the GPS frame timing measurement of UTRAN cells or the UTRAN SFN-SFN measurement. The RNC calculates the RTD (round-trip delay) between the reference cell and the neighbouring cells based on the following parameters:
- the known geographic locations of cells;
- the known geographic location of the LMU;
- results of the UTRAN SFN-SFN measurement or the GPS frame timing measurement of UTRAN cells.

The other possibility is the UE assisted mode. In this case the UE only reports the OTDOA measurements to the RNC, and the RNC calculates the geographical position of the UE knowing the position of the Nodes B.

It is also possible to periodically stop the transmissions from the Node B in DL for the mobiles to make the measurements of the serving and neighbouring cells easier. This is called IPDL (Idle Period in Downlink). And it means that the Node B stops some transmissions in order to not create interference and so as to enable the UE to make measurements of low radio signal Nodes B. In this way, up to three Nodes B can be measured and with the triangulation it is possible to obtain a very good accuracy of the positioning.

This embodiment provides good accuracy, but it is expensive since it needs the LMU nodes. Since WCDMA is not a synchronous telecommunication system, there must be time difference when two cells transmit CPICH signals through their antennas. The time difference is the RTD. To calculate the RTD, the RNC asks the LMU to perform positioning-related common measurements, such as the UTRAN SFN-SFN measurement, or GPS frame timing measurement of UTRAN cells.

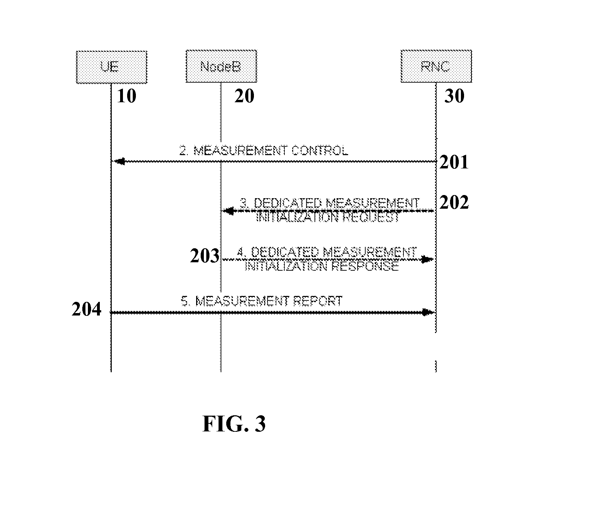

The procedure is standard and it is shown in Figure 3. The RNC 30 asks the UE 10 to perform the OTDOA type 2 measurements in the reference cell and neighbouring cells through a MEASUREMENT CONTROL message 201 on the Uu interface. Then, when the UE is in the CELL_DCH state, the RNC asks the Node B 20 to perform the RTT measurements in the reference cell through a DEDICATED MEASUREMENT INITIALIZATION REQUEST message 202 on the lub/lur interface. This is done in the LMU within the Node B. The Node B reports the RTT measurement results to the RNC through a DEDICATED MEASUREMENT INITIALIZATION RESPONSE message 203 on the lub/lur interface. The UE reports 204 to the RNC:
- The OTDOA measurement results of the reference cell and neighbouring cells.
- The UE Rx-Tx type 2 measurement results of the reference cell (optional)
- The UE reports these results through a MEASUREMENT REPORT message 204 on the Uu interface.

Finally, the RNC 30 performs the location calculation based on:
- the measurement results;
- the RTD between the reference cell and the neighbouring cells;
- the known geographic locations of cells.

### Other positioning systems

There are other ways for the user equipment UE to obtain its coordinates, for example, by means of the Galileo system or the Chinese COMPASS which are global positioning systems based on satellites.

It is also possible to obtain the positioning information by means of connecting the UE to other wireless systems such as Wi-Fi or Bluetooth, with servers providing the coordinates of the access points.

In any case, these positioning systems are not in the 3G network. So in order to get the information it needs regarding the distance between the UE and the Node B, the network needs to request that positioning information to the user equipment UE.

The messages exchanged are also standard and equivalent to those shown in Figure 2.

As shown above, there are quite different ways to obtain or get information about the distance from the UE to the Node B. And, according to the method of the present invention, if said distance is above a predefined threshold, then the call is redirected from 3G bearer (UMTS) to 2G bearer (GSM), so as to prevent the 3G call from being dropped.

There are two possible situations in which the distance between the user equipment UE and the Node B exceeds a pre-established threshold:
- A first case where the call has not been established yet and the RRC (Radio Resource Connection) connection request is sent (see 3GPP TS 25.331, 10.2.36). In this case, since the connection is not even established in the 3G system, the User Equipment is redirected to 2G (GSM) in idle with an RRC Connection Reject with cause "redirection to GSM" in the 'redirection info' field, using a standard message to redirect the call towards to 2G.
- A second case where the call was initiated in a distance less than the threshold distance, but then the User Equipment has moved from the Node B and exceeded that threshold distance. In this case, a standard inter-RAT handover from UMTS to GSM is triggered.

Parameter settings are configured by service, that is, depending on the cause received in the RRC connection request or depending on the RB setup, the redirection will be allowed or not. This means that the call can be conversational, streaming, interactive or background, and the redirection can be enabled or disabled independently for each case. This way, it will be set up for voice calls in order to avoid the dropped call, but not in the case of data, to keep the best throughput in the communication. That is the preferred configuration.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. Method of redirecting a call of a mobile telecommunications device (10) from a first bearer radio access technology to a second bearer radio access technology, comprising:
- obtaining information related to a distance from said device to the serving base station (20); and if said distance is above a specific predefined threshold distance,
- triggering a redirection of said call from the first bearer to the second bearer.

2. Method according to claim 1, wherein said redirection from first bearer to second bearer is done by means of an RRC connection request message with an RRC Connection Reject including information to redirect the call towards the second bearer.

3. Method according to claim 1, wherein said redirection is done during an end-to-end call by means of a standard handover procedure.

4. Method according to any of claims 1-3, wherein the distance is calculated with the standard propagation delay method.

5. Method according to claim 4, wherein said distance is calculated by the UTRAN.

6. Method according to any of claims 1-5, wherein said redirection is activated depending on the type of call: conversational, streaming, interactive and/or background.

7. Method according to any of claims 1-6, wherein said first bearer radio access technology is 3G and the second bearer radio access technology is 2G

8. A network component of a mobile telecommunications network, the network comprising at least a first bearer radio access technology and a second bearer radio access technology, the component comprising:
- distance measuring means for ascertaining the distance between any given mobile telecommunications device (10) and a base station (20) serving said device;
and
- redirection means for redirecting calls made by mobile telecommunications devices from the first bearer radio access technology to the second bearer radio access technology;
wherein the redirection means is operable to redirect calls of the given mobile telecommunications device when the measured distance between the mobile telecommunications device and a base station (20) exceeds a specific predefined threshold distance.

9. A network component according to claim 8, wherein the distance measuring means includes a propagation delay measuring means, the distance being thereby ascertained as the result of the application of a standard propagation delay method.

10. A network component according to claim 8, wherein the distance measuring means includes a multilateration calculation means, the distance being thereby ascertained as the result of the application of a multilateration method.

11. A network component according to claim 8, further comprising receiving means operable to receive positioning data from the given mobile telecommunications device, wherein the position of the serving base station (20) is known and wherein the distance measuring means calculates the relative distance between the mobile telecommunications device and the base station (20) from the received positioning data,

12. A network component according to claim 11, wherein the positioning data is obtained from a GPS unit associated with the mobile telecommunications device.
